# EUROPEAN PATENT APPLICATION

(11) **EP 4 640 402 A1**
(43) Date of publication of application: **29.10.2025**
(21) Application number: 23906684.8
(22) Date of filing: 04.12.2023
(51) Int. Cl.: B29C 45/76, B29C 45/56

(54) **INJECTION MOLDING METHOD AND INJECTION MOLDING MACHINE**

(30) Priority: 20.12.2022 JP 2022203114
(71) Applicant: Nissei Plastic Industrial Co., Ltd., Hanishina-gun, Nagano 389-0693 (JP)
(72) Inventor: SAKAKI Satomi, Hanishina-gun, Nagano 389-0693 (JP); MURATA Hirofumi, Hanishina-gun, Nagano 389-0693 (JP); YODA Hozumi, Hanishina-gun, Nagano 389-0693 (JP)
(74) Representative: Haseltine Lake Kempner LLP
(86) International application number: PCT/JP2023/043274
(87) International publication number: WO 2024/135318

(57) **Abstract**

An injection molding machine includes a molding machine controller 2. The molding machine controller 2 includes: a zero-point setting control function section Fs which advances a movable mold Dm by a mold clamping device Mc from a mold opening position Xc to a position Xz where a mold assembly D is closed and defines, as a zero point Po, the position Xz where the mold assembly is closed; a mold-gap setting control function section Fg which sets a mold gap Lg by retreating the movable mold Dm from the zero point Po by a stroke Lgs corresponding to a target dimension of the mold gap Lg; and an injection filling control function section Fi which causes an injection device to inject a molding material R into the mold assembly D whose mold gap Lgs has been set, to fill the mold assembly D with the molding material R.

## Description

### Technical Field

The present invention relates to an injection molding method and an injection molding machine which perform molding by injecting a molding material to fill a mold assembly which is composed of a movable mold and a stationary mold and in which a predetermined mold gap is provided between the movable mold and the stationary mold.

### Background Art

Conventionally, an injection molding machine (injection molding method) in which a molding material is injected by an injection device to fill a mold assembly clamped by a mold clamping device such that a predetermined mold gap is provided between its movable and stationary molds has been known from, for example, the injection molding machine of Patent Document 1 proposed by the present applicant.

The injection molding machine described in Patent Document 1 has a function of obtaining and setting a molding injection pressure and a mold clamping force which produce a predetermined gap (parting open amount) between the movable and stationary molds of the mold assembly at the time of injection filling and enable molding of conforming articles. The injection molding machine also has a function of performing molding by a particular molding method in which a mold clamping device is clamped with the mold clamping force, and a resin is injected to fill the mold assembly by driving an injection device for which the molding injection pressure is set as a limit pressure. In addition, the means for detecting the parting open amount (mold gap) is configured by using a position detector which is attached to the mold assembly to detect the relative position of the movable mold and the stationary mold.

### Prior Art Publications

### Patent Publications

Patent Document 1: JP2013-22842A

### Disclosure of the Invention

### Problem to be Solved by the Invention

However, conventional injection molding machines (injection molding methods), including the above-described injection molding machine of Patent Document 1, have the following problems to be solved.

First, in an injection molding machine of such a type, a molding material; i.e., a fluidized molten resin, is injected into a mold assembly having a small mold gap such that the mold assembly is filled with the molding material, the accuracy of the set mold gap directly affects molding quality. Conventionally, setting of the mold gap has been performed by using a position detector attached to the mold assembly or a position sensor, such as an encoder, which is disposed near the mold assembly, as shown in Patent Document 1. Therefore, setting of the mold gap is susceptible to the temperatures of the molding machine and the mold assembly. In particular, in the case where molding is performed by using a thermosetting resin as a molding material, since the mold temperature is set to about 160°C to 180°C, metal expansion is apt to occur in the mold assembly, which raises a problem of failure to accurately set the mold gap, possibly resulting in deterioration of the quality and homogeneity of molded products.

Second, a position detector or a position sensor, which is an attachment (dedicated part) of the mold assembly must be provided on the mold assembly itself or near the mold assembly, which is disadvantageous from the viewpoints of cost and maintenance. In addition, a control system which must have high control accuracy becomes necessary, along with a process of performing temperature correction for detection data, etc. For these and other reasons, the configuration of the control system tends to become complicated, and the control-related cost tends to increase. As a result, there has been still room for further improvement from the viewpoints of reducing the number of components and reducing costs.

An object of the present invention is to provide an injection molding method and an injection molding machine which have solved such problems present in the background art.

### Means for Solving the Problem

In order to solve the above-described object, an injection molding method according to the present invention is adapted to perform molding by causing an injection device Mi to inject a molding material R into a mold assembly D which is composed of a movable mold Dm and a stationary mold Dc and is clamped by a mold clamping device Mc such that a predetermined mold gap Lg is provided between the movable mold Dm and the stationary mold Dc. The injection molding method is characterized by comprising:
advancing the movable mold Dm by the mold clamping device Mc from a mold opening position Xo to a position Xz where the mold assembly D is closed (hereinafter referred to as the "mold closed position Xz") and defining the mold closed position Xz as a zero point Po (S2 to S8);
setting the mold gap Lg by retreating the movable mold Dm by the mold clamping device Mc from the zero point Po by a stroke Lgs corresponding to a target dimension of the mold gap Lg (S9 to S11); and
subsequently performing an injection filling process of injecting the molding material R into the mold assembly D whose mold gap Lg has been set, to fill the mold assembly D with the molding material R (S12 to S14).

In addition, in order to solve the above-described object, an injection molding machine M according to the present invention includes a molding machine controller 2 which controls an injection device Mi to inject a molding material R into a mold assembly D which is composed of a movable mold Dm and a stationary mold Dc and is clamped by a mold clamping device Mc such that a predetermined mold gap Lg is provided between the movable mold Dm and the stationary mold Dc. The injection molding machine M is characterized in that the molding machine controller 2 includes:
a zero-point setting control function section Fs which advances the movable mold Dm by the mold clamping device Mc from a mold opening position Xo to a mold closed position Xz and defines the mold closed position Xz as a zero point Po;
a mold-gap setting control function section Fg which sets the mold gap Lg by retreating the movable mold Dm by the mold clamping device Mc from the zero point Po by a stroke Lgs corresponding to a target dimension of the mold gap Lg; and
an injection filling control function section Fi which causes the injection device Mi to inject the molding material R into the mold assembly D whose mold gap Lg has been set, to fill the mold assembly D with the molding material R.

Preferred modes of the present invention are as follows. Setting of the mold gap Lg is desirably performed for each shot in a molding cycle, and the molding material R is desirably a thermosetting resin material. A compression process of pressing the movable mold Dm (S15 to S17) may be performed after the injection filling process of injecting the molding material R into the mold assembly D. Meanwhile, the mold clamping device Mc may be configured to include a movable platen 5 which is supported by a tie bar mechanism section 4 to be movable forward and rearward and which supports the movable mold Dm, a mold clamping platen 7 which is supported by the tie bar mechanism section 4 to be movable forward and rearward and which includes a mold clamping drive mechanism section 6 for performing clamping of the movable mold Dm, and a chuck mechanism section 8 which is integrally provided on the mold clamping platen 7 and can fix the mold clamping platen 7 at a predetermined position on the tie bar mechanism section 4. In addition, an encoder E2 which detects the stroke Lgs by which the movable mold Dm is retreated may be used in the mold-gap setting control function section Fg. Furthermore, the molding machine controller 2 may include a compression control function section Fp which performs a compression process by pressing the movable mold Dm after the injection filling process by the injection filling control function section Fi.

### Effects of the Invention

The injection molding method and the injection molding machine M according to the present invention yield remarkable effects as follows.
(1) The movable mold Dm is advanced by the mold clamping device Mc from the mold opening position Xo to the mold closed position Xz, and the mold closed position Xz is defined as a zero point Po; the mold gap Lg is set by retreating the movable mold Dm from the zero point Po by a stroke Lgs corresponding to a target dimension of the mold gap Lg; and an injection filling process (S13) is subsequently performed in order to inject the molding material R into the mold assembly D whose mold gap Lg has been set, to fill the mold assembly D with the molding material R. Therefore, even in the case where the molding material R is injected into the mold assembly D having a small mold gap Lg, the mold gap Lg can be more precisely set to have an accurate dimension, whereby the quality and homogeneity of molded products can be dramatically improved.
(2) Since there is no requirement to prove a position detector or a position sensor, which is an attachment (dedicated part) of the mold assembly D, on the mold assembly D itself or near the mold assembly, it is possible to reduce costs and improve maintainability. Moreover, since the control system which must have high control accuracy becomes unnecessary, and processing functions, such as a processing function of performing temperature correction for detection data, become unnecessary, it is possible to reduce the cost related to mold control by, for example, simplifying the control system.
(3) In a preferred mode in which setting of the mold gap Lg is performed for each shot in a molding cycle, since variations in the mold gap Lg between shots can be avoided, the injection molding method can be implemented in a manner which is most desirable from the viewpoint of securing molding quality and homogeneity.
(4) In a preferred mode in which the molding material R is a thermosetting resin material, even in the case where the mold temperature is set to about 160°C to 180°C, the mold gap Lg can be accurately set, without being affected by metal expansion in the mold assembly D. Therefore, it is possible to provide an injection molding method (injection molding machine M) which is most suitable for products molded by using a thermosetting resin material such as phenol resin.
(5) In a preferred mode of the injection molding method in which a compression process of pressing the movable mold Dm (S15, S16, S17) is performed by the compression control function section Fp after the injection filling process of injecting the molding material R into the mold assembly D (S13), since the compression process can be performed for the molding material R whose injection and filling amount is accurately controlled, it is possible to provide an optimal injection molding method which can perform compression molding which is high in quality and homogeneity.
(6) In a preferred mode in which the mold clamping device Mc is configured to include the movable platen 5 which is supported by the tie bar mechanism section 4 to be movable forward and rearward and which supports the movable mold Dm, the mold clamping platen 7 which is supported by the tie bar mechanism section 4 to be movable forward and rearward and which includes the mold clamping drive mechanism section 6 for performing clamping of the movable mold Dm, and the chuck mechanism section 8 which is integrally provided on the mold clamping platen 7 and can fix the mold clamping platen 7 at a predetermined position on the tie bar mechanism section 4, it is possible to secure easiness of implementation and certainty of implementation; for example, it is possible to easily and reliably carry out the injection molding method according to the present invention.
(7) In a preferred mode in which the encoder E2 which detects the stroke Lgs by which the movable mold Dm is retreated is used in the mold-gap setting control function section Fg, since the mold gap Lg can be set from the zero point Po which is always accurate, even when the encoder E2 is used, the accurate mold gap Lg can be set easily at low cost.

### Brief Description of the Drawings

Fig. 1 is a flowchart used for describing the processing steps of an injection molding method according to a preferred embodiment of the present invention;
Fig. 2 is a configurational diagram of an injection molding machine used for carrying out the injection molding method;
Fig. 3 is a specific circuit diagram showing an extracted main portion of the injection molding machine;
Fig. 4 is an enlarged cross-sectional view of a chuck mechanism section of a mold clamping device of the injection molding machine; specifically, a portion of Fig. 3 in a dot-dashed circle A;
Fig. 5 is a setting screen illustration showing a portion of a display provided in a molding machine controller of the injection molding machine;
Fig. 6 is a schematic configurational view showing a state of the injection molding machine;
Fig. 7 is a schematic configurational view showing another state of the injection molding machine;
Fig. 8 is a schematic configurational view showing another state of the injection molding machine;
Fig. 9 is a schematic configurational view showing another state of the injection molding machine;
Fig. 10 is a schematic configurational view showing another state of the injection molding machine; and
Fig. 11 is a schematic configurational view showing another state of the injection molding machine.

### Description of Reference Numerals

2: molding machine controller, 4: tie bar mechanism section, 5: movable platen, 6: mold clamping drive mechanism section, 7: mold clamping platen, 8: chuck mechanism section, (S12 to S14): injection filling process, (S15 to S17): compression process, M: injection molding machine, Mc: mold clamping device, Mi: injection device, D: mold assembly, Dm: movable mold, Dc: stationary mold, Lg: mold gap, Lgs: stroke, Xo: mold opening position, Xz: mold closed position, R: molding material, Po: zero point, E2: encoder, Fs: zero-point setting control function section, Fg: mold-gap setting control function section, Fi: injection filling control function section, Fp: compression control function section

### Best Mode for Carrying Out the Invention

Next, a preferred embodiment of the present invention will be described in detail based on the drawings.

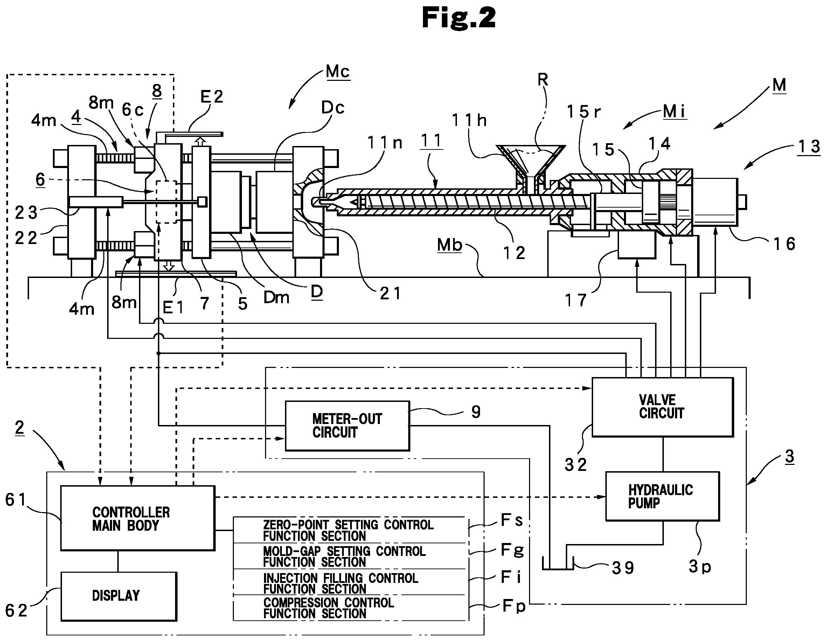

First, the structure of an injection molding machine M which can carry out an injection molding method according to the present embodiment will be described with reference to Figs. 2 to 4.

In Fig. 2, the injection molding machine is denoted by reference sign M and includes an injection device Mi and a mold clamping device Mc, which are disposed on a top surface of a machine base Mb.

The injection device Mi is disposed on the machine base Mb such that the injection device Mi can move forward and rearward. The injection device Mi includes a heating cylinder 11 having an injection nozzle 11n at its forward end and a hopper 11h at its rear portion. A screw 12 is inserted into an internal space of the heating cylinder 11, and a screw drive section 13 is disposed at a rear end of the heating cylinder 11. The screw drive section 13 has an injection cylinder 14 including a single-rod-type injection ram 15. A ram rod 15r projecting forward from the injection ram 15 is coupled to a rear end of the screw 12. A shaft of a screw rotating motor (oil motor) 16 attached to the injection cylinder 14 is splined-coupled to a rear end of the injection ram 15. Reference sign 17 denotes an injection device moving cylinder which moves the injection device Mi forward and rearward, thereby establishing nozzle touch to the mold assembly D or cancelling the nozzle touch.

The mold clamping device Mc includes, as a basic structure, a movable platen 5 which is supported by a tie bar mechanism section 4 to be movable forward and rearward and which supports a movable mold Dm, a mold clamping platen 7 which is supported by the tie bar mechanism section 4 to be movable forward and rearward and which includes a mold clamping drive mechanism section 6 for performing clamping of the movable mold Dm, and a chuck mechanism section 8 which is integrally provided on the mold clamping platen 7 and can fix the mold clamping platen 7 at a predetermined position on the tie bar mechanism section 4.

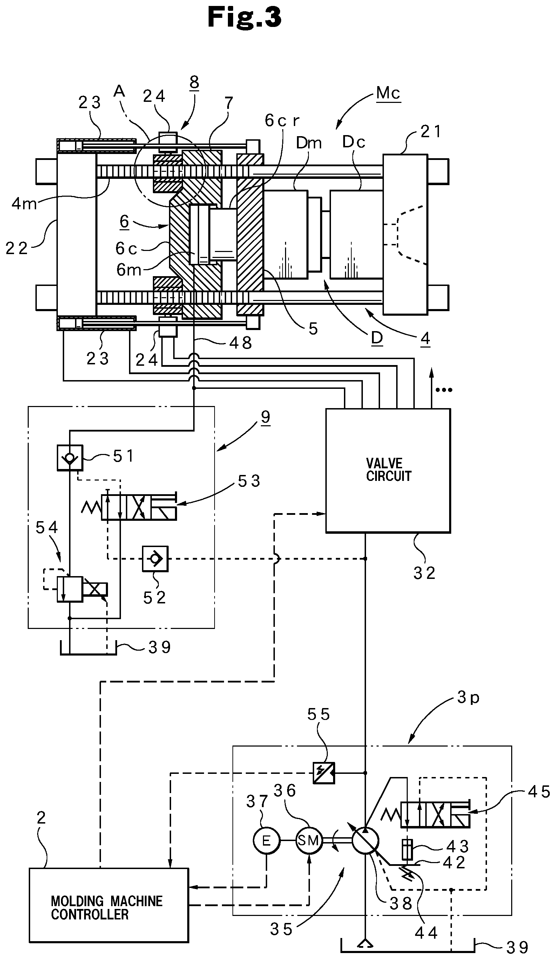

More specifically, as shown in Figs. 2 and 3, a first stationary plate 21 and a second stationary plate 22 are fixed on the top surface of the machine base Mb such that the first stationary plate 21 and the second stationary plate 22 are separated from each other. Four tie bars 4m are provided to extend parallel between four corners of the first stationary plate 21 and four corners of the second stationary plate 22. The movable platen 5 and the mold clamping platen 7 are slidably supported by the tie bars 4m. As a result, the stationary mold Dc is supported by the forward stationary plate 21, the movable mold Dm is supported by the movable platen 5, and a mold assembly D is constituted by the stationary mold Dc and the movable mold Dm.

As shown in Fig. 3, the mold clamping drive mechanism section 6 is incorporated in the mold clamping platen 7. The mold clamping drive mechanism section 6 is composed of a single-rod-type mold clamping cylinder 6c, and an end of a forwardly projecting mold clamping ram 6cr is fixed to a back surface of the movable platen 5. In the case where the mold clamping cylinder 6c is used in the mold clamping drive mechanism section 6 as described above, since a hydraulic circuit 3 (which will be described later) including the mold clamping cylinder 6c can be utilized, molding quality can be improved by shock absorption of the hydraulic circuit 3 for the molding material R at the time of injection filling. Notably, reference signs 23, 23 denote left and right single-rod-type mold opening/closing cylinders provided between the rear stationary plate 22 and the movable platen 5.

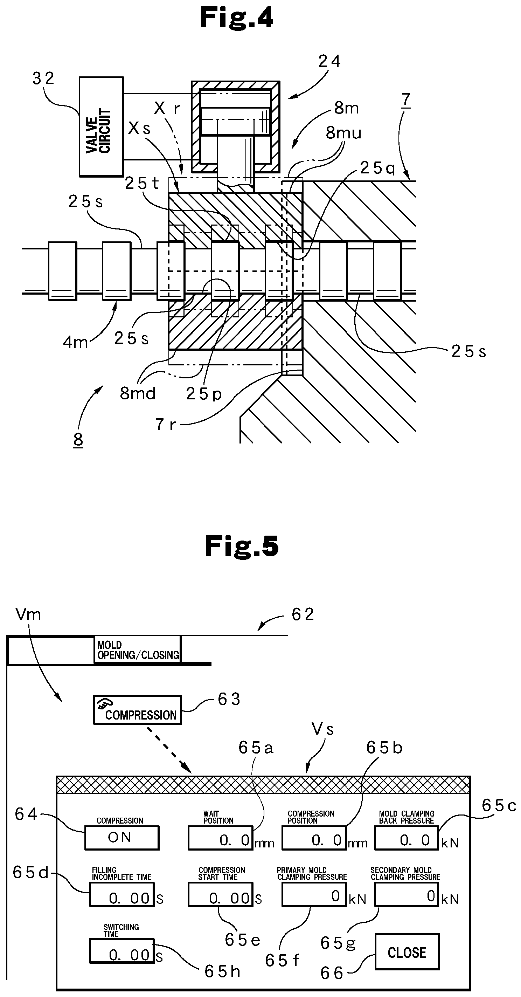

The chuck mechanism section 8 is disposed on the back surface (on the side toward the second stationary plate 22) of the mold clamping platen 7. The chuck mechanism section 8 is composed of four chuck sections 8m corresponding to the four tie bars 4m. The structure of one tie bar 4m will be described (other tie bars 4m have the same structure). As shown in Fig. 4, the tie bar 4m has annular grooves 25s formed on its outer circumferential surface at predetermined intervals along the axial direction.

The structure of one chuck section 8m will be described (other chuck sections 8m have the same structure). The chuck section 8m includes upper and lower chuck halves (half nuts) 8mu and 8md and is configured to fixedly chuck the tie bar 4m by sandwiching it by the chuck halves 8mu and 8md. In the case of the illustrated example, as shown in Fig. 4, an engagement portion 7r having a guiderail mechanism is provided on the back surface of the mold clamping platen 7, the upper and lower chuck halves 8mu and 8md are engaged with the engagement portion 7r to be movable upward and downward, respectively, and the chuck section 8m is configured such that the upper and lower chuck halves 8mu and 8md can be moved in directions opposite to each other by a link mechanism. A chuck cylinder 24 is coupled to one chuck half 8mu so as to move the upper and lower chuck halves 8mu and 8md upward and downward, respectively. Annular protrusions 25p, which are fitted into the grooves 25s provided on the outer circumferential surface of the tie bar 4m, are formed on inner circumferential surfaces of the upper and lower chuck halves 8mu and 8md. Annular grooves 25q, into which protrusions 25t provided on the outer circumferential surface of the tie bar 4m are fitted, are formed on inner circumferential surfaces of the upper and lower chuck halves 8mu and 8md.

By virtue of the above-described configuration, when the piston ram of the chuck cylinder 24 shown in Fig. 4 is forced to project, the chuck halves 8mu and 8md move to respective chucking positions Xs; i.e., the positions of the chuck halves 8mu and 8md shown by a solid cross section. As a result, the protrusions 25t engage with the grooves 25q, thereby fixing the mold clamping platen 7. When the piston ram of the chuck cylinder 24 is retreated, the chuck halves 8mu and 8md move to respective chucking cancellation positions Xr; i.e., the positions of the chuck halves 8mu and 8md shown by imaginary lines. As a result, the protrusions 25t are disengaged from the grooves 25q, thereby permitting movement of the mold clamping platen 7 in the axial direction. Notably, the illustrated structure of the chuck section 8m is one example, and the chuck section 8m may be configured, for example, such that, since four chuck sections 8m are provided, the inner circumferential surfaces of the chuck halves 8md are made flat, and the protrusions 25p are provided only on the inner circumferential surfaces of the chuck halves 8mu. Basically, the chuck section 8m can be replaced with any of various known mechanisms having the same functions.

In the case where, as described above, the mold clamping device Mc is configured to include the movable platen 5 which is supported by the tie bar mechanism section 4 to be movable forward and rearward and which supports the movable mold Dm, the mold clamping platen 7 which is supported by the tie bar mechanism section 4 to be movable forward and rearward and which includes the mold clamping drive mechanism section 6 (the mold clamping cylinder 6c) for performing clamping of the movable mold Dm, and the chuck mechanism section 8 which is integrally provided on the mold clamping platen 7 and can fix the mold clamping platen 7 at a predetermined position on the tie bar mechanism section 4, it is possible to secure easiness of implementation and certainty of implementation; for example, it is possible to easily and reliably carry out the injection molding method according to the present invention.

Meanwhile, the hydraulic circuit denoted by reference sign 3 includes, as a main portion, a variable-delivery-type hydraulic pump 3p serving as a hydraulic drive source, a valve circuit 32 which performs various types of switching and control, and a meter-out circuit 9 connected to the mold clamping cylinder 6c according to the present invention. In the case where, as described above, the injection device Mi and the mold clamping device Mc are driven by the hydraulic circuit 3 including the hydraulic pump 3p, since hydraulic shock absorption can be utilized, the injection molding method according to the present invention can be carried out in an optimum manner. In particular, it becomes possible to absorb the shock against the molding material R at the time of injection filling, thereby contributing to improvement of molding quality.

As shown in Fig. 3, the hydraulic pump 3p includes a pump unit 35 and a servo motor 36 which rotatively drives the pump unit 35. Notably, reference sign 37 denotes a rotary encoder for detecting the rotational speed of the servo motor 36. The pump unit 35 includes a pump body 38 composed of a swash-plate-type piston pump. Therefore, the pump unit 35 has a swash plate 42. When the inclination angle of the swash plate 42 (swash plate angle) is increased, the stroke of a pump piston in the pump body 38 increases, and the discharge flow rate of the pump unit increases. When the swash plate angle is decreased, the stroke of the pump piston decreases and the discharge flow rate of the pump unit decreases. As a result, by setting the swash plate angle to a predetermined angle, it becomes possible to set a fixed discharge flow rate at which the discharge flow rate (the maximum capacity) is fixed to a predetermined magnitude. A control cylinder 43 and a return spring 44 are additionally provided for the swash plate 42, and the control cylinder 43 is connected to a discharge port of the pump unit 35 (the pump body 38) via a switching valve (electromagnetic valve) 45. As a result, the angle of the swash plate 42 (swash plate angle) can be changed by controlling the control cylinder 43.

An intake port of the pump unit 35 is connected to an oil tank 39, and the discharge port of the pump unit 35 is connected to a primary side of the valve circuit 32. A secondary side of the valve circuit 32 is connected to the injection cylinder 14, the screw rotating motor 16, the injection device moving cylinder 17, the mold clamping cylinder 6c, the mold opening/closing cylinders 23a ..., the chuck cylinders 24, which have been described above, and is also connected to other actuators of various types such as an unillustrated ejector cylinder. Therefore, the valve circuit 32 includes switching valves (electromagnetic valves) connected to these actuators. Each switching valve is composed of one or more valve components, necessary additional hydraulic components, etc. and has a switching function associated with supply of working fluid, stoppage of the working fluid, and discharge of the working fluid at least for the injection cylinder 14, the screw rotating motor 16, the injection device moving cylinder 17, the mold clamping cylinder 6c, the mold opening/closing cylinders 23a ..., the chuck cylinders 24, which have been described above, and for other actuators of various types such as an unillustrated ejector cylinder. Thus, the discharge flow rate and discharge pressure of the variable-delivery-type hydraulic pump 3p can be changed by variably controlling the rotational speed of the servo motor 36.

Furthermore, as shown in Fig. 3, a flow-in side of the meter-out circuit 9 is connected to a working fluid line 48 connected to an oil chamber (rear oil chamber) 6m of the mold clamping cylinder 6c, and a flow-out side of the meter-out circuit 9 is connected to the oil tank 39. The meter-out circuit 9 includes check valves 51 and 52, a directional control valve (electromagnetic valve) 53, and a relief valve (back pressure control valve) 54, which are connected as shown in Fig. 3.

By virtue of this configuration, in the case of the present embodiment, in an injection filling process, control for the mold clamping device Mc can be performed only by back pressure control using the meter-out circuit 9. Namely, by virtue of the function of the meter-out circuit 9, when the pressure of the molding material R within the mold assembly D is equal to or lower than a set back pressure Pb [kN], the pressure of the molding material R is maintained at that pressure. When the pressure of the molding material R exceeds the back pressure Pb [kN], by virtue of the function of the relief valve 54, the pressure of the molding material R is maintained at the back pressure Pb [kN].

In the case where the meter-out circuit 9 connected to the mold clamping cylinder 6c is provided as described above, since the meter-out circuit 9 can be realized by merely adding the relatively simple hydraulic circuit 3, implementation can be performed easily at low cost. Additionally, the back pressure control can be performed easily and reliably. Also, the injection device Mi and the mold clamping device Mc can be driven by the common hydraulic pump 3p. Namely, at the time of injection filling, only the back pressure control for the mold clamping device Mc is necessary and drive force by the hydraulic pump becomes unnecessary. Therefore, of two hydraulic pumps; i.e., the hydraulic pump on the injection device Mi side and the hydraulic pump on the mold clamping device Mc side, which normally become necessary at the time of injection filling, the hydraulic pump on the mold clamping device Mc side becomes unnecessary, which contributes to remarkable cost reduction.

Meanwhile, reference sign 2 denotes a molding machine controller. A controller main body 61 and a display 62 are contained in the molding machine controller 2. The above-described servo motor 36 is connected to a servo amplifier output port of the controller main body 61, and the valve circuit 32 is connected to a control signal output port of the controller main body 61. Encoder pulses obtained from the rotary encoder 37 are input to a servo amplifier of the controller main body 61. Notably, reference sign 55 denotes a pressure sensor for detecting the pressure of the working fluid supplied to the primary side of the valve circuit 32. The pressure detected by the pressure sensor 55 is given to the controller main body 61 of the molding machine controller 2.

The controller main body 61 includes hardware such as a CPU, an internal memory, etc. and provides a computer function. Accordingly, a control program (software) for executing various types of control processes (sequence control) is stored in the internal memory, and a data memory for storing various types of data (database) is contained.

Accordingly, by executing the control program, the controller main body 61 has basic control function sections for realizing at least the injection molding method according to the present embodiment; i.e., at least a zero-point setting control function section Fs, a mold-gap setting control function section Fg, and an injection filling control function section Fi. More desirably, the controller main body 61 also has a compression control function section Fp as a specific control function section. In this case, the zero-point setting control function section Fs has a function of advancing the movable mold Dm by the mold clamping device Mc from a mold opening position Xo to a mold closed position Xz and defining the mold closed position Xz as a zero point Po, and the mold-gap setting control function section Fg has a function of setting the mold gap Lg by retracting the movable mold Dm by a stroke Lgs corresponding to a target dimension of the mold gap Lg from the zero point Po detected by the zero-point setting control function section Fs. The injection filling control function section Fi has a function of causing the injection device Mi to inject the molding material R into the mold assembly D whose mold gap Lg has been set, thereby filling it with the molding material R, and the compression control function section Fp has a function of pressing the movable mold Dm after the injection filling process by the injection filling control function section Fi, thereby performing a compression process.

Meanwhile, as shown in Fig. 2, a mold clamping platen position detection encoder (position sensor) E1 is disposed on the upper surface of the machine base Mb. The position (movement position) of the mold clamping platen 7 in the forward/rearward direction is detected by this encoder E1, and data representing the detected position of the mold clamping platen 7 are supplied to the controller main body 61. In addition, a movable platen position detection encoder (position sensor) E2 is provided on the outer surface of the mold clamping platen 7. The position (movement position) of the movable platen 5 in the forward/rearward direction is detected by this encoder E2, and data representing the detected position of the movable platen 5 are supplied to the controller main body 61. Accordingly, this encoder E2 (E1) is used in the mold-gap setting control function section Fg which detects the stroke Lgs by which the movable mold Dm is retracted.

The display 62 can perform various types of displays, and a touch panel is added thereto. This touch panel enables various types of setting operations, selecting operations, etc. Fig. 5 shows a setting screen which is used for performing the injection molding method according to the present embodiment; in particular, a state in which a mold opening/closing screen Vm is displayed. Since a "compression" switch 63 is provided on this mold opening/closing screen Vm, by turning on this "compression" switch 63, a setting screen Vs used in the injection molding method according to the present embodiment can be displayed in a window. This setting screen Vs has a compression ON/OFF selection key 64, a wait position setting section 65a for setting a wait position [mm] of the movable platen 5 before injection, a compression position setting section 65b for setting a compression start position [mm], a mold clamping back pressure setting section 65c for setting a mold clamping holding pressure (back pressure) [kN] during injection, a filling incomplete time setting section 65d for setting a filling incomplete time Ts [sec] in the case of a failure to move to the wait position, a compression start time setting section 65e for setting a compression start time Ti [sec], a primary mold clamping pressure setting section 65f for setting a compression pressure [kN] for primary mold clamping, a secondary mold clamping pressure setting section 65g for setting a compression pressure [kN] for secondary mold clamping, and a switching time setting section 65h for setting a switching time [sec] for switching to the secondary mold clamping. Notably, reference sign 66 denotes a "close" key of the setting screen Vs.

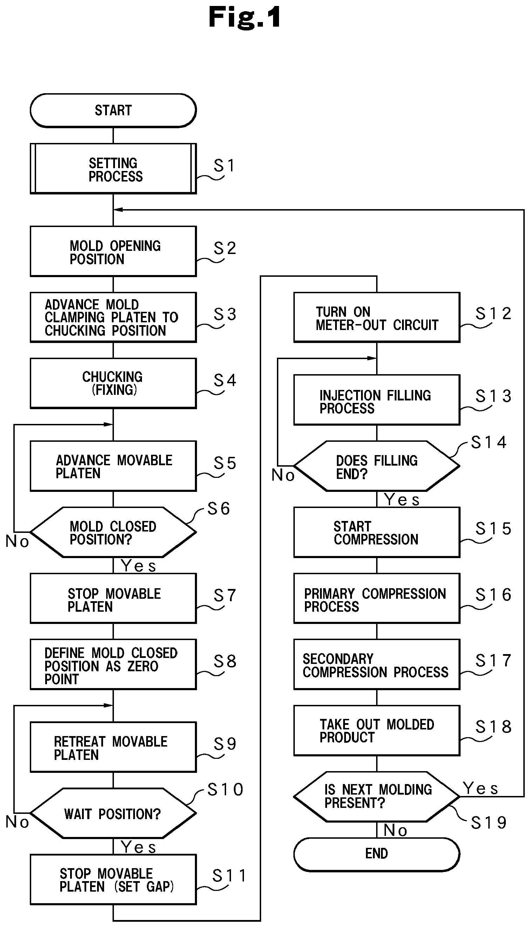

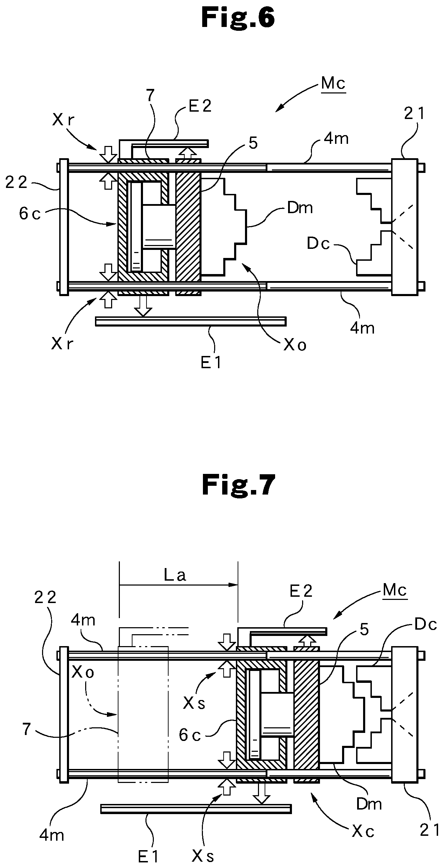

Next, the injection molding method according to the present embodiment which is performed by using the injection molding machine M will be described step by step according to the flowchart shown in Fig. 1 and with reference to mainly Figs. 6 to 11.

When the injection molding method according to the present embodiment is performed, first a setting process is performed (step S1). In this setting process, various types of ordinary molding conditions are set, and the above-described various types of items relating to the injection molding method according to the present embodiment are set by using the setting screen Vs shown in Fig. 5.

It is assumed that the movable mold Dm (the mold clamping platen 7) of the mold clamping device Mc is currently located at the mold opening position Xo shown in Fig. 6 (step S2). The mold clamping device Mc (the movable mold Dm) has been moved to this mold opening position Xo as a result of the chuck sections 8m being switched to the chucking cancellation position Xr through drive control of the chuck cylinders 24, the movable platen 5 being moved to the retreated position (the second stationary plate 22 side) through drive control of the mold clamping cylinder 6c, and the movable platen 5 and the mold clamping platen 7 being retreated through drive control of the mold opening/closing cylinders 23. Notably, the positions of the mold clamping platen 7 and the movable platen 5 are detected by the mold clamping platen position detection encoder E1 and the movable platen position detection encoder E2.

At the time of production, by driving and controlling the mold opening/closing cylinders 23, the movable platen 5 and the mold clamping platen 7 are advanced at high speed from the mold opening position Xo to a chucking position Xc shown in Fig. 7 (step S3). When they reach the chucking position Xc, by driving and controlling the chuck cylinders 24, the chuck sections 8m are switched to the chucking positions Xs, thereby fixing the mold clamping platen 7 to the tie bars 4m (step S4). Notably, in Fig. 7, reference sign La denotes the movement stroke of the mold clamping platen 7 from the mold opening position Xo to the chucking position Xc.

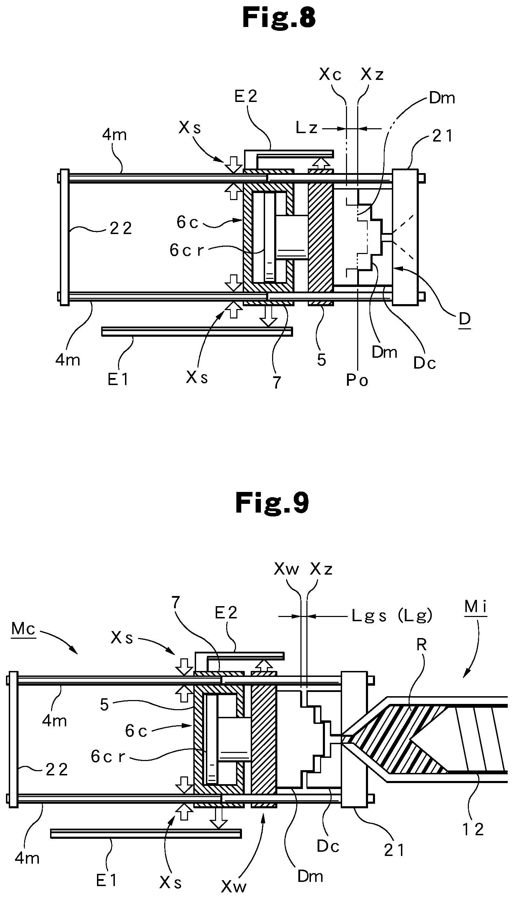

Next, the mold clamping cylinder 6c is driven and controlled by the zero-point setting control function section Fs shown in Fig. 2 so as to advance the movable platen 5 as shown in Fig. 8. This advance movement is performed until the movable mold Dm reaches the mold closed position Xz (step S5). Namely, the movable platen 5 is advanced until the movable mold Dm butts against the stationary mold Dc. When the movable mold Dm reaches the mold closed position Xz, movement of the movable mold Dm is stopped (steps S6 and S7). As a result, this mold closed position Xz is defined as a zero point Po (step S8). Notably, in Fig. 8, Lz represents the movement stroke of the movable mold Dm from the above-described chucking position Xc to the mold closed position Xz.

Subsequently, the mold clamping cylinder 6c is driven and controlled by the mold-gap setting control function section Fg shown in Fig. 2 so as to retreat the movable platen 5 as shown in Fig. 9. In this retreat movement, the movable mold Dm is retreated from the zero point Po (the mold closed position Xz) by a stroke Lgs corresponding to a target dimension of the mold gap Lg. Namely, the movable mold Dm is retreated from the mold closed position Xz to a wait position Xw set beforehand (step S9). When the movable mold Dm reaches the wait position Xw, the retreat movement of the movable mold Dm is stopped (steps S10 and S11). As a result, the mold gap Lg is accurately set. notably, the amount of retreat movement corresponding to the stroke Lgs is detected by the movable platen position detection encoder (position sensor) E2. In the case where, as described above, the encoder E2, which detects the stroke Ls by which the movable mold Dm is retreated, is used in the mold-gap setting control function section Fg, since the mold gap Lg can be set from the zero point Po which is always accurate, the accurate mold gap Lg can be set easily at low cost despite use of the encoder E2.

As a result, preparation for starting injection on the mold clamping device Mc side is completed. Therefore, the directional control valve 53 of the meter-out circuit 9 is switched to a meter-out ON side (step S12).

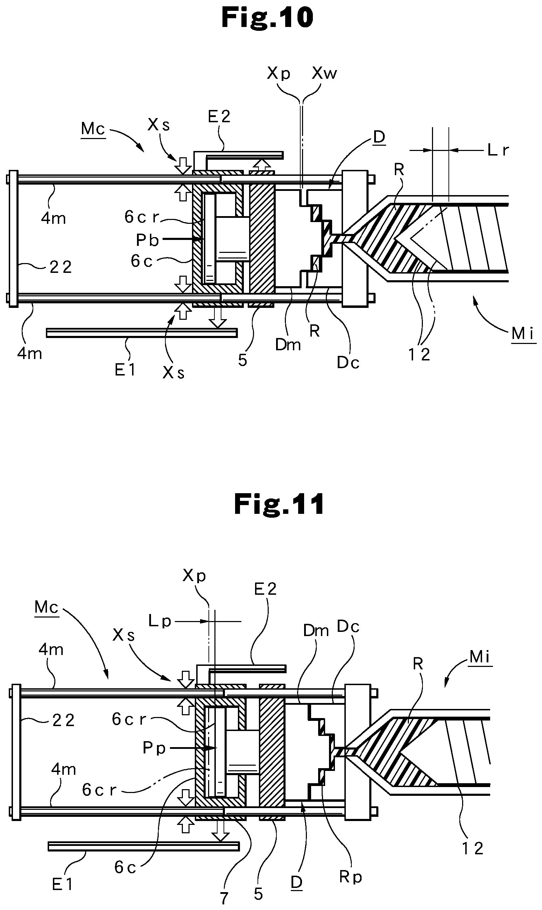

Meanwhile, in the injection device Mi, the screw 12 rotates as a result of drive control of the screw rotating motor 16, whereby the molding material R supplied to the hopper 11h is accumulated in front of the screw 12. Therefore, the molding machine controller 2 advances the injection device Mi to a nozzle touch position shown in Fig. 9 by driving and controlling the injection device moving cylinder 17. As a result, preparation for starting injection on the injection device Mi side is completed. Therefore, the screw 12 is advanced by a stroke Lr shown in Fig. 10 by the injection filling control function section Fi shown in Fig. 2, thereby performing an injection filling process of injecting the molding material R into the mold assembly D whose mold gap Lg has been set and filling it with the molding material R (step S13).

In this case, as result of start of inj ection, the screw 12 advances, and the molding material R is injected, through the injection nozzle 11n, into the cavity of the mold assembly D; i.e., the mold gap Lg between the movable mold Dm and the stationary mold Dc. Notably, immediately before start of injection, the mold gap Lg is present between the movable mold Dm and the stationary mold Dc, the injection pressure is zero, and the mold clamping force is zero. Therefore, the pressure difference between the forward side and the rear side of the movable platen 5 is zero (balanced state), and the movable platen 5 is in a standstill state.

Notably, in the present embodiment, a thermosetting resin material is used as the molding material R. In general, the heating temperature of the mold assembly D is set to about 160°C to 180°C for molding of the thermosetting resin material. Even in the case where the mold temperature is set to such a temperature range, the mold gap Lg can be accurately set by the above-described setting method for the mold gap Lg, without being affected by metal expansion in the mold assembly D. Therefore, the present invention can provide an injection molding method (injection molding machine M) which is most suitable for products molded by using a thermosetting resin material such as phenol resin.

The thermosetting resin material used as the molding material R has a relatively low fluidity. However, since the mold clamping force at the beginning is zero, the molding material R is relatively smoothly injected into the cavity of the mold assembly D and fills it. With progress of the injection filling process, the pressure of the molding material R within the mold assembly D increases, and the movable platen 5 retreats gradually because the mold clamping platen 7 is fixed in position by the chuck sections 8m in the chucking position Xs. At that time, the pressure of the molding material R is maintained at the set back pressure Pb [kN] by the function of the meter-out circuit 9.

When the movable platen 5 reaches a set compression start position Xp as shown in Fig. 10, an end process for ending the injection filling process is performed. At that time, the screw 12 advances to a position near a most advanced position. In Fig. 10, reference sign Pb denotes the back pressure [kN] applied to the mold clamping ram 6cr. Therefore, in this case, an injection end condition is that the movable platen 5 reaches the compression start position Xp.

Subsequently, when a compression start time Ti [sec] set by the compression start time setting section 65e comes, a compression process for pressurizing the molding material R within the mold assembly D by the movable mold Dm is started (steps S14 and S15). In this case, the compression start time may include "0." In the compression process, as shown in Fig. 11, the movable platen 5 is pressed forward (toward the first stationary plate 21 side) with a predetermined pressing force Pp by switching the meter-out circuit 9 to an OFF state and driving and controlling the mold clamping cylinder 6c by the compression control function section Fp shown in Fig. 2. In Fig. 11, reference sign Lp denotes the amount of displacement of the mold clamping ram 6cr due to the pressing force Pp; i.e., a compression amount.

As shown in Fig. 5, the illustrated compression process is set by the primary mold clamping pressure [kN] and the secondary mold clamping pressure [kN]. Therefore, at the time of the compression process, a primary compression process is first performed with the primary mold clamping pressure (step S16). Subsequently, when the switching time [sec] comes, the compression pressure is switched to the secondary mold clamping pressure (step S17). In the embodiment in which such a compression process is performed, since the compression process can be performed for the molding material R whose injection and filling amount is accurately controlled, it is possible to provide an optimal injection molding method which can perform compression molding which is high in quality and homogeneity.

Subsequently, mold opening is performed after completion of the compression process, and a process for ejecting a molded product is performed (step S18). Furthermore, in the case where the next production is continuously performed, the same molding process is performed (steps S19, S2, ...).

As described above, in the injection molding method according to the present embodiment, setting of the above-described mold gap Lg is performed for each shot in a molding cycle. By virtue of this, variations in the mold gap Lg between shots can be avoided, whereby the injection molding method can be implemented in a manner which is most desirable from the viewpoint of securing molding quality and homogeneity.

In the injection molding method (the injection molding machine M) according to the present embodiment as described above, steps described below are performed as a basic procedure. Namely, by using the mold clamping device Mc, the movable mold Dm is advanced from the mold opening position Xo to the mold closed position Xz, and the mold closed position Xz is defined as the zero point Po. The movable mold Dm is then retreated from the zero point Po by the stroke Lgs corresponding to the target dimension of the set mold gap Lg, whereby the mold gap Lg is set. Subsequently, the injection filling process of injecting the molding material R into the mold assembly D whose mold gap Lg has been set is performed. Therefore, even in the case where the molding material R is injected into the mold assembly D having a small mold gap Lg, the mold gap Lg can be more precisely set to have an accurate dimension, whereby the quality and homogeneity of molded products can be dramatically improved. In addition, since there is no requirement to provide a position detector or a position sensor, which is an attachment (dedicated part) of the mold assembly D, on the mold assembly D itself or near the mold assembly D, which is advantageous from the viewpoints of cost and maintenance. Moreover, since the control system which must have high control accuracy becomes unnecessary, and processing functions, such as a processing function of performing temperature correction for detection data, become unnecessary, it is possible to reduce the cost related to control of the mold assembly D by, for example, simplifying the control system.

The preferred embodiment has been described in detail. However, the present invention is not limited to such embodiment, and, as to structures of details, shapes, materials, quantities, numerical values, etc., alteration, addition, and deletion can be performed arbitrarily within a range not departing from the gist of the present invention.

For example, setting of the mold gap Lg is desirably performed for each shot in the molding cycle. For example, in the illustrated embodiment, the zero point Po is detected, and the mold gap Lg is set by directly using the detected zero point Po. However, the case where the detected zero point Po is registered and is used for the next shot or a plurality of subsequent shots is not excluded. In addition, thermosetting resin materials are the most suitable for the molding material R, and any type of thermosetting resin material can be used. Use of other molding materials such as thermoplastic resin materials is not excluded. Notably, although the case where a hydraulic drive system is used as a system for driving the injection molding machine is shown as an example, the present injection molding method can be similarly performed even when any of other drive systems such as a motor drive system is employed. Although the case where the compression process of pressing the movable mold Dm is performed after the process of injecting the molding material R into the mold assembly D is shown as an example, the case where injection molding is performed by any other molding methods (e.g., the case where the molding material R is cooled by performing natural compression, without performing a forced compression process) is not excluded. Meanwhile, the illustrated mold clamping device Mc is configured to include the movable platen 5 which is supported by the tie bar mechanism section 4 to be movable forward and rearward and which supports the movable mold Dm, the mold clamping platen 7 which is supported by the tie bar mechanism section 4 to be movable forward and rearward and which includes the mold clamping drive mechanism section 6 for performing clamping of the movable mold Dm, and the chuck mechanism section 8 which is integrally provided on the mold clamping platen 7 and can fix the mold clamping platen 7 at a predetermined position on the tie bar mechanism section 4. However, use of other mold clamping devices Mc which can perform the above operation similarly is not excluded. In addition, although the case where the encoder E2 is used in the mold-gap setting control function section Fg is shown, various other types of position sensors for position detection can be used.

### Industrial Applicability

The injection molding method and the injection molding machine according to the present invention can be used as various types of injection molding machines which perform molding by fluidizing various types of molding materials and injecting the molding materials into molds to fill the molds, and as injection molding methods used in these injection molding machines.

## Claims

1. An injection molding method for performing molding by causing an injection device to inject a molding material into a mold assembly which is composed of a movable mold and a stationary mold and is clamped by a mold clamping device such that a predetermined mold gap is provided between the movable mold and the stationary mold, the injection molding method being **characterized by** comprising:
advancing the movable mold by the mold clamping device from a mold opening position to a position where the mold assembly is closed and defining, as a zero point, the position where the mold assembly is closed;
setting the mold gap by retreating the movable mold by the mold clamping device from the zero point by a stroke corresponding to a target dimension of the mold gap; and
subsequently performing an injection filling process of injecting the molding material into the mold assembly whose mold gap has been set, to fill the mold assembly with the molding material.

2. The injection molding method according to claim 1, wherein setting of the mold gap is performed for each shot in a molding cycle.

3. The inj ection molding method according to claim 1, wherein the molding material is a thermosetting resin material.

4. The injection molding method according to claim 1, wherein a compression process of pressing the movable mold is performed after the injection filling process of injecting the molding material into the mold assembly.

5. An injection molding machine including a molding machine controller which controls an injection device to inject a molding material into a mold assembly which is composed of a movable mold and a stationary mold and is clamped by a mold clamping device such that a predetermined mold gap is provided between the movable mold and the stationary mold, the injection molding machine being **characterized in that** the molding machine controller comprises:
a zero-point setting control function section which advances the movable mold by the mold clamping device from a mold opening position to a position where the mold assembly is closed and defines, as a zero point, the position where the mold assembly is closed;
a mold-gap setting control function section which sets the mold gap by retreating the movable mold by the mold clamping device from the zero point by a stroke corresponding to a target dimension of the mold gap; and
an injection filling control function section which causes the injection device to inject the molding material into the mold assembly whose mold gap has been set, to fill the mold assembly with the molding material.

6. The injection molding machine according to claim 5, wherein the mold clamping device includes a movable platen which is supported by a tie bar mechanism section to be movable forward and rearward and which supports the movable mold, a mold clamping platen which is supported by the tie bar mechanism section to be movable forward and rearward and which includes a mold clamping drive mechanism section for performing clamping of the movable mold, and a chuck mechanism section which is integrally provided on the mold clamping platen and can fix the mold clamping platen at a predetermined position on the tie bar mechanism section.

7. The injection molding machine according to claim 5, wherein the mold-gap setting function section includes an encoder which detects the amount of retreat movement corresponding to the stroke by which the movable mold is retreated.

8. The injection molding machine according to claim 5, wherein the molding machine controller comprises a compression control function section which performs a compression process by pressing the movable mold after the injection filling process by the injection filling control function section.
